# EUROPÄISCHE PATENTSCHRIFT

(11) **EP 3 234 966 B1**
(45) Veröffentlichungstag und Bekanntmachung des Hinweises auf die Patenterteilung: **07.08.2019**
(21) Anmeldenummer: 15804768.8
(22) Anmeldetag: 03.12.2015
(51) Int. Cl.: H01F 38/14, B60L 53/12

(54) **FAHRZEUG-INDUKTIVLADEVORRICHTUNG ZUM INDUKTIVLADEN EINES FAHRZEUGS, FAHRZEUG BZW. STATIONÄRE LADESTATION**
VEHICLE INDUCTIVE CHARGING DEVICE FOR INDUCTIVELY CHARGING A VEHICLE, VEHICLE, AND STATIONARY CHARGING STATION
DISPOSITIF DE CHARGE PAR INDUCTION POUR VÉHICULE, DESTINÉ À CHARGER UN VÉHICULE PAR INDUCTION, VÉHICULE OU STATION DE CHARGE FIXE

(30) Priorität: 16.12.2014 DE 102014225974
(43) Veröffentlichungstag der Anmeldung: 25.10.2017
(73) Patentinhaber: Continental Automotive GmbH, 30165 Hannover (DE)
(72) Erfinder: RÖHRL, Thomas, 93092 Barbing (DE); BARTZ, Stephan, 93152 Undorf (DE)
(86) Internationale Anmeldenummer: PCT/EP2015/078497
(87) Internationale Veröffentlichungsnummer: WO 2016/096455

(56) Entgegenhaltungen:
- EP-A2- 2 660 834
- DE-A1- 10 255 376
- US-A1- 2004 119 576
- US-A1- 2007 131 505
- US-A1- 2014 265 555

## Beschreibung

### Technisches Gebiet

Die vorliegende Erfindung betrifft eine Fahrzeug-Induktivladevorrichtung mit einer Empfangsspulenanordnung zum Induktivladen einer Batterie eines Fahrzeugs, insb. einer Traktionsbatterie eines Hybridelektro-/Elektrofahrzeugs.

Ferner betrifft die Erfindung ein Fahrzeug, insb. ein Hybridelektro-/Elektrofahrzeug, mit einer genannten Fahrzeug-Induktivladevorrichtung sowie eine stationäre Ladestation mit einer Spulenanordnung, die gemäß der Empfangsspulenanordnung der genannten Fahrzeug-Induktivladevorrichtung ausgebildet ist.

### Stand der Technik

Es gibt Fahrzeuge mit Batterien, insb. Hybridelektro- oder Elektrofahrzeuge mit Traktionsbatterien, die von fahrzeugexternen Ladestationen induktiv aufgeladen werden. Das Induktivladen dieser Fahrzeuge erfolgt mittels einer ladestationsseitigen Primärspule (Sendespule) und einer fahrzeugseitigen Sekundärspule (Empfangsspule), wobei die Primärspule, welche mit Strom beaufschlagt wird, ein Magnetfeld mit einer Sendeleistung erzeugt, das von der Sekundärspule aufgenommen und in Ladestrom mit einer Ladeleistung umgewandelt wird. Umgekehrt kann auch die in der fahrzeugseitigen Batterie gespeicherte elektrische Leistung von der fahrzeugseitigen Sekundärspule, die in diesem Fall als Sendespule agiert, in Form vom Magnetfeld zu der ladestationsseitigen Primärspule, die in diesem Fall als Empfangsspule agiert, übertragen und einem öffentlichen Stromversorgungsnetz eingespeist werden.

Eine Offenlegungsschrift US 2004/119576 A1 beschreibt einen kontaktlosen Koppler, der zwei Magnetkerne umfasst, die jeweils einen U-förmigen offenen Magnetpfad aufweisen. Um die Magnetkerne sind jeweils eine Primärspule und eine Sekundärspule gewickelt. Der Koppler überträgt elektrische Wechselspannung zwischen der Primärspule und der Sekundärspule mittels eines ringförmigen geschlossenen magnetischen Pfades, der in der Nähe offener Stirnseiten der beiden Magnetkerne gebildet ist.

Eine weitere Offenlegungsschrift DE 102 55 376 A1 beschreibt ein induktives Bauelement, das zwei, jeweils mit zumindest einem Luftspalt versehene, rahmenförmige Magnetkerne aufweist. Diese beiden Kerne sind in einem axialen Abstand übereinander angeordnet. Die Luftspalte sind dabei so angeordnet, dass sie sich in radialer Richtung diametral gegenüber stehen. Über die beiden Kerne ist eine Wicklung gewickelt, um eine Spule zu bilden.

Eine weitere Offenlegungsschrift US 2014/265555 A1 beschreibt ein System zur drahtlosen Energieverteilung beschrieben. Das System umfasst einen Quellenresonator, der mit einer Energiequelle eines Fahrzeugs gekoppelt ist und ein oszillierendes Magnetfeld mit einer Frequenz erzeugt. Ein Verstärker-Resonator ist in der Nähe des Quellenresonators positioniert, der eine Resonanzfrequenz aufweist, die der Frequenz des Quellenresonators entspricht. Der Verstärker-Resonator stellt eine effektive drahtlose Energieübertragung innerhalb eines definierten Bereichs sicher.

Dabei ist bekannt, dass sich das von der Primärspule erzeugte Magnetfeld nicht nur in eine Raumrichtung, sondern in alle Himmelsrichtungen ausbreitet. Dies führt dazu, dass nur ein begrenzter Anteil der von der Primärspule generierten Sendeleistung von der Sekundärspule aufgenommen und in Ladeleistung umgewandelt werden kann. Dadurch wird der Wirkungsgrad bei dem Induktivladen beeinträchtigt.

Damit besteht die Aufgabe der vorliegenden Erfindung darin, das Induktivladen eines Fahrzeugs effizienter zu machen.

Diese Aufgabe wird durch Gegenstände der unabhängigen Ansprüche gelöst. Vorteilhafte Ausgestaltungen sind Gegenstand der Unteransprüche.

Gemäß einem ersten Aspekt der Erfindung wird eine Fahrzeug-Induktivladevorrichtung mit einer Empfangsspulenanordnung zum Induktivladen einer Batterie eines Fahrzeugs, insb. einer Traktionsbatterie eines Hybridelektro- oder Elektrofahrzeugs, bereitgestellt.

Die Empfangsspulenanordnung umfasst einen äußeren Ferritkern, der eine Fläche umschließend ausgebildet ist.

Die Empfangsspulenanordnung umfasst ferner einen inneren Ferritkern, der über zumindest eine Verbindungsstelle mit dem äußeren Ferritkern körperlich verbunden ist und sich von dieser Verbindungsstelle aus im Wesentlichen in der von dem äußeren Ferritkern umrandeten Fläche erstreckt.

Der Erfindung liegt der Gedanke zugrunde, dass der Wirkungsgrad bei dem Induktivladen dadurch erhöht werden kann, wenn die Sekundär- bzw. Empfangsspule das von der Primär- bzw. Sendespule erzeugte Magnetfeld effizienter empfängt und in elektrischen Strom umwandelt.

Durch die Kombination zumindest eines äußeren Ferritkerns und zumindest eines inneren Ferritkerns mit unterschiedlichen Formen, wobei der äußere Ferritkern eine Fläche umrandet, in der der innere Ferritkern platziert ist, ist ermöglicht, sowohl vertikal verlaufende als auch horizontal verlaufende Magnetfeldkomponenten und somit insgesamt mehr Anteile von dem Magnetfeld zu empfangen und in Strom umzuwandeln.

Damit kann mehr Sendeleistung, die von der Sendespule in Form von Magnetfeld der Empfangsspule gestrahlt wird, von der Empfangsspule bzw. der Empfangsspulenanordnung empfangen und in elektrischen Strom umgewandelt werden. Dadurch ist eine Möglichkeit bereitgestellt, eine Batterie eines Fahrzeugs effizienter induktiv zu laden.

Die Empfangsspulenanordnung umfasst vorzugsweise ferner zumindest einen Luftspalt, der in dem äußeren Ferritkern, in dem inneren Ferritkern und/oder zwischen dem äußeren und dem inneren Ferritkern ausgebildet ist. Der zumindest eine Luftspalt unterbricht dabei den äußeren bzw. den inneren Ferritkern in dessen jeweiliger Längserstreckungsrichtung (bzw. Längsverlauf) und verhindert somit magnetische Kurzschlüsse in dem bzw. in den Ferritkernen.

Vorzugsweise umfasst die Empfangsspulenanordnung ferner zumindest ein Verbindungsteil aus einem nicht-ferromagnetischen (und vorzugsweise auch elektrisch isolierenden) Material, das den zumindest einen Luftspalt füllt. Das Verbindungsmaterial verleiht dem bzw. den Ferritkernen und somit der Empfangsspulenanordnung mechanische Stabilität.

Das Verbindungsmaterial kann bspw. aus Kunststoff oder Aluminium bestehen bzw. enthalten.

Der äußere Ferritkern ist vorzugsweise im Wesentlichen ringförmig, wie z. B. kreisring-, ovalring- oder ellipsenringförmig, oder mehreckig, insb. mit abgerundeten Kanten, ausgebildet.

Der innere Ferritkern ist vorzugsweise im Wesentlichen stabförmig ausgebildet.

Alternativ ist der innere Ferritkern im Wesentlichen kreuzförmig, insb. speichenförmig, ausgebildet. Als "speichenförmig" wird insb. eine Form bezeichnet, bei der mehrere stabförmig verlaufende Abschnitte sich an einer gemeinsamen Stelle treffen bzw. kreuzen. Die Stelle ist in der Mitte bzw. in der Nähe der Mitte der Fläche.

Die Empfangsspulenanordnung umfasst ferner eine äußere Spule, die entlang der Längserstreckungsrichtung des äußeren Ferritkerns gewickelt ist.

Die Empfangsspulenanordnung umfasst vorzugsweise ferner eine innere Spule, die im Wesentlichen schrauben- bzw. helixförmig um zumindest einen Abschnitt des inneren Ferritkerns herum gewickelt ist.

Vorzugsweise sind die äußere und die innere Spule (bspw. mittels eines Schalters) zueinander parallel oder seriell schaltbar ausgeführt.

Vorzugsweise weist der äußere Ferritkern bzw. der innere Ferritkern zumindest zwei Bereiche auf, die unterschiedlich starke magnetische Permeabilitäten (magnetische Leitfähigkeiten) aufweisen.

Gemäß einem weiteren Aspekt der Erfindung wird ein Fahrzeug mit einer Batterie, insb. ein Hybridelektro- oder Elektrofahrzeug mit einer Traktionsbatterie, bereitgestellt. Das Fahrzeug umfasst eine zuvor beschriebene Fahrzeug-Induktivladevorrichtung mit einer Empfangsspulenanordnung zum Induktivladen der Batterie bzw. der Traktionsbatterie.

Gemäß noch einem weiteren Aspekt der Erfindung wird eine stationäre fahrzeugexterne Ladestation zum Induktivladen einer Batterie eines Fahrzeugs, insb. einer Traktionsbatterie eines Hybridelektro- oder Elektrofahrzeugs, bereitgestellt. Dabei umfasst die Ladestation eine Spulenanordnung, die gemäß der Empfangsspulenanordnung der zuvor beschriebenen Fahrzeug-Induktivladevorrichtung ausgebildet ist. Mithilfe dieser ladestationsseitigen Empfangsspulenanordnung und einer fahrzeugseitigen Sendespule kann die in der Batterie gespeicherte elektrische Leistung von dem Fahrzeug an die Ladestation übertragen und von der Ladestation einem (öffentlichen) Stromnetz gespeist werden.

Vorteilhafte Ausgestaltungen der oben beschriebenen Empfangsspulenanordnung sind, soweit im Übrigen auf das oben genannte Fahrzeug oder auf die oben genannte Ladestation übertragbar, auch als vorteilhafte Ausgestaltungen des Fahrzeugs bzw. der Ladestation anzusehen.

Im Folgenden werden beispielhafte Ausführungsformen der Erfindung bezugnehmend auf die beiliegende Zeichnung näher erläutert. Dabei zeigen:
- Figur 1: in einer schematischen Draufsicht eine Empfangsspulenanordnung gemäß einer ersten Ausführungsform der Erfindung;
- Figur 2: in einer schematischen Draufsicht eine Empfangsspulenanordnung gemäß einer zweiten Ausführungsform der Erfindung;
- Figur 3: in einer schematischen Draufsicht eine Empfangsspulenanordnung gemäß einer dritten Ausführungsform der Erfindung;
- Figur 4: in einer schematischen Draufsicht eine Empfangsspulenanordnung gemäß einer vierten Ausführungsform der Erfindung;
- Figur 5: in einer schematischen Draufsicht eine Empfangsspulenanordnung gemäß einer fünften Ausführungsform der Erfindung;
- Figur 6: in einer schematischen Draufsicht eine Empfangsspulenanordnung gemäß einer sechsten Ausführungsform der Erfindung;
- Figur 7: in einer schematischen Seitensicht eine Empfangsspulenanordnung einer der in Figuren 1 bis 6 dargestellten Ausführungsformen der Erfindung;
- Figur 8: in einer schematischen Seitensicht eine Empfangsspulenanordnung einer weiteren der in Figuren 1 bis 6 dargestellten Ausführungsformen der Erfindung;
- Figur 9: in einer schematischen Seitensicht eine Empfangsspulenanordnung einer weiteren der in Figuren 1 bis 6 dargestellten Ausführungsformen der Erfindung.

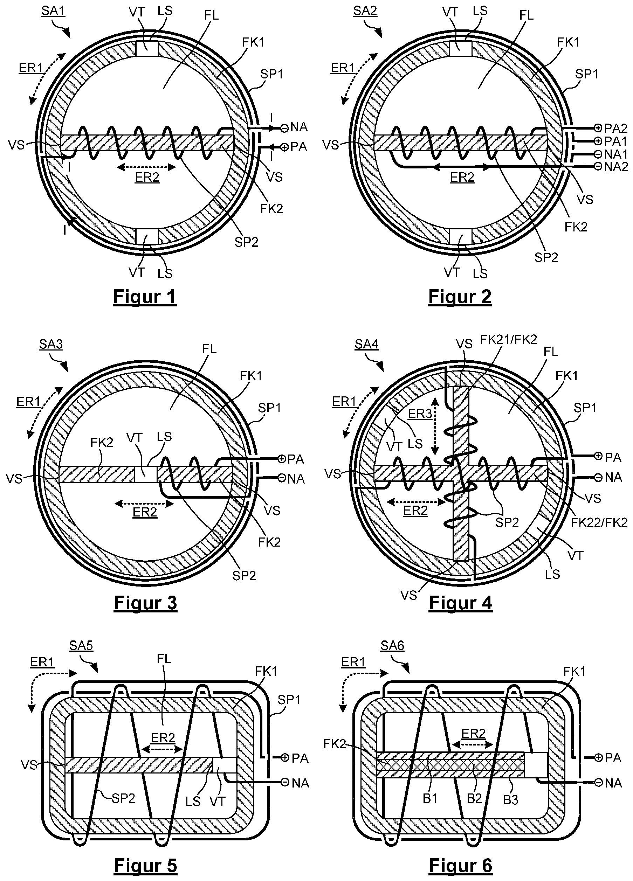

Figur 1 zeigt in einer schematischen Draufsicht eine Empfangsspulenanordnung SA1 gemäß einer ersten Ausführungsform der Erfindung.

Die Empfangsspulenanordnung SA1 umfasst einen äußeren Ferritkern FK1 und einen inneren Ferritkern FK2 aus einem ferromagnetischen Material.

Der äußere Ferritkern FK1 ist kreisringförmig ausgebildet und weist zwei Luftspalte LS (diese sind zur besseren Darstellung überdimensional dargestellt) auf, die den äußeren Ferritkern FK1 in dessen Längserstreckungsrichtung ER1 unterbrechen, so dass der äußere Ferritkern FK1 quasi in zwei C-förmigen Ferritelemente geteilt sind. In diesen Luftspalten LS weist der äußere Ferritkern FK1 jeweils ein Verbindungsteil VT aus einem nicht-ferromagnetischen Material auf, wobei die Verbindungsteile VT die jeweiligen Luftspalte LS füllen und mit den beiden C-förmigen Ferritelementen einstückig ausgebildet sind. Damit verbinden die beiden Verbindungsteile VT die beiden Ferritelemente miteinander und halten diese mechanisch fest zusammen.

Der äußere Ferritkern FK1 umschließt eine kreisscheibenförmige Fläche FL.

Der innere Ferritkern FK2 ist stabförmig ausgebildet und ist in der von dem äußeren Ferritkern FK1 umschlossenen Fläche FL angeordnet. Der innere Ferritkern FK2 ist über zwei Verbindungsstellen VS mit dem äußeren Ferritkern FK1 körperlich verbunden und erstreckt sich entlang einer Mittellinie der Fläche FL von einer Verbindungsstelle VS zu einer anderen gegenüberliegenden Verbindungsstelle VS.

Die Empfangsspulenanordnung SA1 umfasst ferner eine äußere Spule SP1, die entlang der Längserstreckungsrichtung ER1 des äußeren Ferritkerns FK1 und somit den äußeren Ferritkern FK1 in dessen Längserstreckungsrichtung ER1 umlaufend gewickelt ist.

Die Empfangsspulenanordnung SA1 umfasst ferner eine innere Spule SP2, die sich entlang dessen Längserstreckungsrichtung ER2 und über dessen gesamte Länge erstreckt und um den inneren Ferritkern FK2 herum helixförmig gewickelt ist. Damit bildet die innere Spule SP2 eine Zylinderspule (Solenoid) aus.

Die äußere und die innere Spule SP1, SP2 bestehen aus einem und demselben Kupferdraht mit entsprechender elektrischer Isolierschicht. Damit sind die beiden Spulen SP1, SP2 zueinander in Serie geschaltet und weisen einen gemeinsamen positiven Stromanschluss PA und einen gemeinsamen negativen Stromanschluss NA auf. Induktionsströme, die unter Einwirkung von einem von einer in Figur 1 nicht dargestellten Sendespulenanordnung ausgestrahlten Magnetfeld in der äußeren und in der inneren Spule SP1, SP2 induziert werden, werden zu einem Ladestrom I aufaddiert und über den gemeinsamen positiven Stromanschluss PA und den gemeinsamen negativen Stromanschluss NA bspw. einer nachgeschalteten Traktionsbatterie eines Hybridelektrofahrzeugs zugeführt.

Die Empfangsspulenanordnung SA1 kann in einem umhüllenden Gehäuse verbaut oder mit einer Spritzgussmaße umgossen sein, so dass diese stabil und wasserdicht bspw. in dem Hybridelektrofahrzeug verbaut werden kann.

Die Querschnitte der beiden Ferritkerne FK1, FK2 bzw. die Masse von den ferromagnetischen Materialien in den beiden Ferritkernen FK1, FK2 können in deren jeweiligen Längserstreckungsrichtungen ER1, ER2 variieren.

Es können auch zwei oder mehr äußere Ferritkerne FK1 vorgesehen sein, die dann zusammen eine äußere Ferritkerngruppe ausbilden. Dabei können die äußere Ferritkerne FK1 übereinander angeordnet sein, aber auch mit unterschiedlichen Durchmessern ausgebildet und zueinander koaxial angeordnet sein.

Analog können auch zwei oder mehr innere Ferritkerne FK2 vorsehen sein, die dann in der von dem äußeren Ferritkern FK1 umrandeten Fläche FL nebeneinander, insb. zueinander parallel, angeordnet sein können.

Ferner können die Ferritkerne Fk1, FK2 in Richtung zu der Sendespulenanordnung hin gewölbt verformt sein. Dadurch wird die magnetische Kopplung der Empfangsspulenanordnung SA1 an die Sendespulenanordnung verbessert.

Figur 2 zeigt in einer schematischen Draufsicht eine Empfangsspulenanordnung SA2 gemäß einer zweiten Ausführungsform der Erfindung.

Die Empfangsspulenanordnung SA2 in Figur 2 unterscheidet sich von der in Figur 1 gezeigten Empfangsspulenanordnung SA1 dadurch, dass die äußere und die innere Spule SP1, SP2 aus zwei voneinander (elektrisch) getrennten Kupferdrähten mit entsprechenden elektrischen Isolierschichten bestehen und somit zueinander parallel geschaltet sind. Damit können zwei Induktionsströme generiert werden, die von den beiden Spulen SP1, SP2 voneinander unabhängig generiert und über voneinander elektrische getrennte Anschlüsse PA1, NA1 bzw. PA2, NA2 der beiden Spulen SP1, SP2 der Traktionsbatterie zugeführt werden können.

Durch zusätzliche (Um-)Schalter, die zwischen Stromanschlüssen PA1, NA1, PA2, NA2 angeschlossen werden, können die beiden Induktionsströme bei Bedarf zu einem Ladestrom zusammengeführt werden.

Figur 3 zeigt in einer schematischen Draufsicht eine Empfangsspulenanordnung SA3 gemäß einer dritten Ausführungsform der Erfindung.

Die Empfangsspulenanordnung SA3 in Figur 3 unterscheidet sich von der in Figur 1 dargestellten Empfangsspulenanordnung SA1 dadurch, dass der äußere Ferritkern FK1 einstückig ausgebildet ist und keine Luftspalte LS bzw. keine Verbindungsteile VT aufweist.

Dagegen weist der innere Ferritkern FK2 einen Luftspalt LS, der sich in der Mitte des inneren Ferritkerns FK2 befindet und den inneren Ferritkern FK2 in dessen Längserstreckungsrichtung ER2 in zwei Ferritelemente teilt. In diesem Luftspalt LS weist der innere Ferritkern FK2 ein Verbindungsteil aus einem nicht-ferromagnetischen Material auf, das den Luftspalt LS füllt und mit den beiden Ferritelementen einstückig und mechanisch fest zusammengebaut ist.

Zudem ist die innere Spule SP2 der Empfangsspulenanordnung SA3 nicht über die gesamte Länge des inneren Ferritkerns FK2, sondern lediglich bis zu dessen Luftspalt LS und somit nur über eine Hälfte der gesamten Länge des inneren Ferritkerns FK2 gewickelt.

Figur 4 zeigt in einer schematischen Draufsicht eine Empfangsspulenanordnung SA4 gemäß einer vierten Ausführungsform der Erfindung.

Die Empfangsspulenanordnung SA4 in Figur 4 unterscheidet sich von der in Figur 1 dargestellten Empfangsspulenanordnung SA1 dadurch, dass der innere Ferritkern FK2 kreuzförmig ausgebildet ist bzw. zwei stabförmige Ferritelemente FK21, FK22 aus demselben ferromagnetischen Material (oder auch aus zwei unterschiedlichen ferromagnetischen Materialen mit unterschiedlichen magnetischen Permeabilitäten) aufweist, die in der von dem äußeren Ferritkern FK1 umrandeten Fläche FL zueinander kreuzförmig angeordnet sind und miteinander einstückig ausgebildet sind.

Die innere Spule SP2 der Empfangsspulenanordnung SA4 ist zuerst helixförmig um eins der beiden Ferritelemente FK21 herum entlang dessen Längserstreckungsrichtung ER2 und über dessen gesamten Länge gewickelt. Danach ist die innere Spule SP2 entlang der Längserstreckungsrichtung ER1 des äußeren Ferritkerns FK1 bis zu einer Verbindungsstelle VS eines anderen Ferritelements FK22 geführt. Anschließend ist die innere Spule SP2 helixförmig um dieses Ferritelement FK22 herum entlang dessen Längserstreckungsrichtung ER3 und über dessen gesamten Länge gewickelt.

Die Empfangsspulenanordnung SA4 hat gegenüber den Empfangsspulenanordnungen SA1, SA2 und SA3 den Vorteil, dass diese Magnetfeldkomponenten sowohl in drei Raumrichtungen aufnehmen können.

Figur 5 zeigt in einer schematischen Draufsicht eine Empfangsspulenanordnung SA5 gemäß einer fünften Ausführungsform der Erfindung.

Die Empfangsspulenanordnung SA5 in Figur 5 unterscheidet sich von der in Figur 1 dargestellten Empfangsspulenanordnung SA1 dadurch, dass der äußere Ferritkern FK1 nicht kreisrund sondern viereckig mit abgerundeten Kanten ausgebildet ist und somit quasi eine Form eines Viereckrings aufweist.

Die innere Spule SP1 der Empfangsspulenanordnung SA5 ist nicht nur um den inneren Ferritkern FK2 gewickelt, sondern auch um zwei gegenüberliegende Kanten des äußeren Ferritkerns FK1 helixförmig gewickelt, die sich in der Längserstreckungsrichtung ER2 des inneren Ferritkerns FK2 erstrecken. Damit überspannen die einzelnen Windungen der inneren Spule SP2 die von dem äußeren Ferritkern FK1 umrandete Fläche FL.

Figur 6 zeigt in einer schematischen Draufsicht eine Empfangsspulenanordnung SA6 gemäß einer sechsten Ausführungsform der Erfindung.

Die Empfangsspulenanordnung SA6 in Figur 6 unterscheidet sich von der in Figur 5 dargestellten Empfangsspulenanordnung SA5 dadurch, dass der innere Ferritkern FK2 aus drei Ferritelementen aus unterschiedlichen ferromagnetischen Materialien zusammengebaut ist. Die drei Ferritelemente bilden drei Bereiche B1, B2 und B3 des inneren Ferritkerns FK2 aus, die in der Längserstreckungsrichtung ER2 des inneren Ferritkerns FK2 beieinander angeordnet sind und miteinander körperlich verbunden sind.

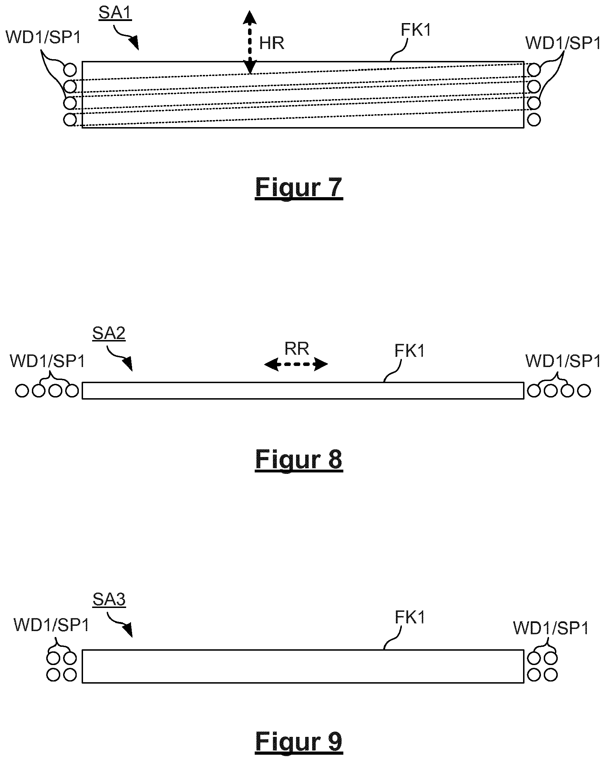

Figur 7 zeigt in einer schematischen Seitensicht eine der oben dargestellten Empfangsspulenanordnung, wobei eine Wicklungsform der äußeren Spule SP1 der Empfangsspulenanordnung SA1 beispielhaft veranschaulicht ist.

Die äußere Spule SP1 ist in dieser Ausführungsform (mehrlagig) schrauben- oder helixförmig gewickelt, wobei die einzelnen Windungen WD1 der äußeren Spule SP1 in Höhenrichtung HR des äußeren Ferritkerns FK1 betrachtet übereinander liegen.

Figur 8 zeigt in einer schematischen Seitensicht eine weitere der oben dargestellten Empfangsspulenanordnung, wobei eine weitere Wicklungsform der äußeren Spule SP1 der Empfangsspulenanordnung SA2 beispielhaft veranschaulicht ist.

Die äußere Spule SP1 ist in dieser Ausführungsform einlagig spiralförmig und somit sich von dem Mittelpunkt der von dem äußeren Ferritkern FK1 umrandeten Fläche FL entfernend gewickelt, wobei die einzelnen Windungen WD1 der äußeren Spule SP1 in radialer Richtung RR des äußeren Ferritkerns FK1 betrachtet nebeneinander liegen.

Figur 9 zeigt in einer schematischen Seitensicht noch eine weitere der oben dargestellten Empfangsspulenanordnung, wobei eine weitere Wicklungsform der äußeren Spule SP1 der Empfangsspulenanordnung SA3 beispielhaft veranschaulicht ist.

Die äußere Spule SP1 ist in dieser Ausführungsform sowohl schraubenförmig als auch spiralförmig gewickelt, wobei einzelne Windungen WD1 der äußeren Spule SP1 sowohl übereinander als auch nebeneinander liegen.

Die oben beschriebenen Empfangsspulenanordnungen SP1, SP2, SP3, SP4, SP5 bzw. SP6 haben eine Gemeinsamkeit, dass sie jeweils zumindest zwei Ferritkerne FK1, FK2 umfassen, die unterschiedlich geformt sind und vorzugsweise auch aus unterschiedlichen ferromagnetischen Materialien bestehen.

Die Merkmale der oben beschriebenen Ausführungsformen können miteinander kombiniert werden, sofern sich die Kombination positiv auf den Wirkungsgrad der entsprechenden Empfangsspulenanordnung auswirkt. So kann bspw. der äußere Ferritkern FK1 der in Figur 6 dargestellten Empfangsspulenanordnung SP6 aus mehreren Ferritelementen aus unterschiedlichen ferromagnetischen Materialien zusammengebaut sein. Analog können die beiden Ferritkerne FK1, FK2 der in Figuren 1 bis 5 dargestellten Empfangsspulenanordnung SP1, SP2, SP3, SP4 und SP5 auch aus mehreren Ferritelementen aus unterschiedlichen ferromagnetischen Materialien zusammengebaut sein.

Es kann auch eine Empfangsspulenvorrichtung vorgesehen sein, die mehrere zuvor beschriebene Empfangsspulenanordnungen SP1, SP2, SP3, SP4, SP5 und/oder SP6 umfasst, wobei die Empfangsspulenanordnungen SP1, SP2, SP3, SP4, SP5 und/oder SP6 auch gemischt kombiniert verwendet werden können.

Durch die Kombination verschiedener Ferritkernformen mit unterschiedlich gewickelten Spulen SP1, SP2 können sowohl vertikale, als auch horizontale Feldkomponenten des von der Sendespulenanordnung erzeugten Magnetfeldes von der oben beschriebenen Empfangsspulenanordnung SP1, SP2, SP3, SP4, SP5 oder SP6 empfangen und in Strom umgewandelt werden.

Der innere Ferritkern FK2 der oben beschriebenen Empfangsspulenanordnung SP1, SP2, SP3, SP4, SP5 oder SP6 kann auch kreis- oder rechteckscheibenförmig ausgebildet sein und die von dem jeweiligen äußeren Ferritkern FK1 der entsprechenden Empfangsspulenanordnung SP1, SP2, SP3, SP4, SP5 oder SP6 umrandeten Fläche FL bis auf einen kreis- oder rechteckringförmigen freien Randbereich vollständig füllen. Derartige Ausführung des inneren Ferritkerns FK2 hat den Vorteil, dass die effektive Spulenfläche der inneren Spule SP2 erhöht wird, wodurch wiederum mehr Anteile des magnetischen Feldes von der Empfangsspulenanordnung SP1, SP2, SP3, SP4, SP5 oder SP6 empfangen und in Strom umgewandelt werden können.

Die zuvor beschriebene Empfangsspulenanordnung SP1, SP2, SP3, SP4, SP5 oder SP6 ist bspw. als Teil einer Fahrzeug-Induktivladevorrichtung in einem Unterboden eines Hybridelektrofahrzeugs angeordnet und eingerichtet, das von der im Boden unter dem Hybridelektrofahrzeug angeordneten Sendespulenanordnung einer stationären Ladestation ausgestrahlte Magnetfeld zu empfangen und in elektrischen Strom umzuwandeln.

## Patentansprüche

1. Fahrzeug-Induktivladevorrichtung mit einer Empfangsspulenanordnung (SA1, SA2, SA3, SA4, SA5, SA6) zum Induktivladen eines Fahrzeugs, wobei die Empfangsspulenanordnung (SA1, SA2, SA3, SA4, SA5, SA6) umfasst:
- einen äußeren Ferritkern (FK1), der eine Fläche (FL) umschließend geformt ist;
- einen inneren Ferritkern (FK2), der über zumindest eine Verbindungsstelle (VS) mit dem äußeren Ferritkern (FK1) körperlich verbunden ist und sich von dieser Verbindungsstelle (VS) aus in der Fläche (FL) erstreckt,
**dadurch gekennzeichnet, dass**
- die Empfangsspulenanordnung (SA1, SA2, SA3, SA4, SA5, SA6) ferner eine äußere Spule (SP1) umfasst, die entlang einer Längserstreckungsrichtung (ER1) des äußeren Ferritkerns (FK1) um den äußeren Ferritkern (FK1) gewickelt ist.

2. Fahrzeug-Induktivladevorrichtung nach Anspruch 1, wobei die Empfangsspulenanordnung (SA1, SA2, SA3, SA4, SA5, SA6) ferner zumindest einen Luftspalt (LS) aufweist, der in dem äußeren Ferritkern (FK1), in dem inneren Ferritkern (FK2), und/oder zwischen dem äußeren (FK1) und dem inneren (FK2) Ferritkern ausgebildet ist und den äußeren (FK1) bzw. den inneren (FK2) Ferritkern in dessen jeweiliger Längserstreckungsrichtung (ER1, ER2) unterbricht.

3. Fahrzeug-Induktivladevorrichtung nach Anspruch 2, wobei die Empfangsspulenanordnung (SA1, SA2, SA3, SA4, SA5, SA6) ferner zumindest ein Verbindungsteil (VT) aus einem nicht-ferromagnetischen Material umfasst, das den zumindest einen Luftspalt (LS) füllt und der Empfangsspulenanordnung (SA1, SA2, SA3, SA4, SA5, SA6) mechanische Stabilität verleiht.

4. Fahrzeug-Induktivladevorrichtung nach einem der vorangehenden Ansprüche, wobei der äußere Ferritkern (FK1) im Wesentlichen ringförmig oder mehreckig ausgebildet ist.

5. Fahrzeug-Induktivladevorrichtung nach einem der vorangehenden Ansprüche, wobei der innere Ferritkern (FK2) im Wesentlichen stabförmig ausgebildet ist.

6. Fahrzeug-Induktivladevorrichtung nach einem der Ansprüche 1 bis 4, wobei der innere Ferritkern (FK2) im Wesentlichen kreuzförmig, insb. speichenförmig, ausgebildet ist.

7. Fahrzeug-Induktivladevorrichtung nach einem der vorangehenden Ansprüche, wobei die Empfangsspulenanordnung (SA1, SA2, SA3, SA4, SA5, SA6) ferner eine innere Spule (SP2) umfasst, die um zumindest einen Abschnitt des inneren Ferritkerns (FK2) herum gewickelt ist.

8. Fahrzeug-Induktivladevorrichtung nach Anspruch 7, wobei die äußere (SP1) und die innere (SP2) Spule zueinander parallel oder seriell schaltbar ausgeführt sind.

9. Fahrzeug-Induktivladevorrichtung nach einem der vorangehenden Ansprüche, wobei der äußere Ferritkern (FK1) bzw. der innere Ferritkern (FK2) zumindest zwei Bereiche (B1, B2, B3) aufweist, die unterschiedlich starke magnetische Permeabilitäten aufweisen.

10. Fahrzeug mit einer Batterie, insb. Hybridelektro- oder Elektrofahrzeug mit einer Traktionsbatterie, umfassend eine Fahrzeug-Induktivladevorrichtung mit einer Empfangsspulenanordnung (SA1, SA2, SA3, SA4, SA5, SA6) nach einem der vorangehenden Ansprüche zum Induktivladen der Batterie.

11. Stationäre Ladestation zum Induktivladen einer Batterie eines Fahrzeugs, insb. einer Traktionsbatterie eines Hybridelektro- oder Elektrofahrzeugs, umfassend eine Spulenanordnung, die gemäß der Empfangsspulenanordnung (SA1, SA2, SA3, SA4, SA5, SA6) der Fahrzeug-Induktivladevorrichtung nach einem der vorangehenden Ansprüche 1 bis 9 ausgebildet ist.

## Claims

1. Vehicle inductive charging apparatus having a receiving coil arrangement (SA1, SA2, SA3, SA4, SA5, SA6) for inductively charging a vehicle, wherein the receiving coil arrangement (SA1, SA2, SA3, SA4, SA5, SA6) comprises:
- an outer ferrite core (FK1) which is formed so as to enclose a surface area (FL);
- an inner ferrite core (FK2) which is physically connected to the outer ferrite core (FK1) by means of at least one connecting point (VS) and extends in the surface area (FL) from this connecting point (VS),
**characterized in that**
- the receiving coil arrangement (SA1, SA2, SA3, SA4, SA5, SA6) further comprises an outer coil (SP1) which is wound around the outer ferrite core (FK1) along a direction of longitudinal extent (ER1) of the outer ferrite core (FK1).

2. Vehicle inductive charging apparatus according to Claim 1, wherein the receiving coil arrangement (SA1, SA2, SA3, SA4, SA5, SA6) further has at least one air gap (LS) which is formed in the outer ferrite core (FK1), in the inner ferrite core (FK2) and/or between the outer ferrite core (FK1) and the inner ferrite core (FK2) and interrupts the outer ferrite core (FK1) or the inner ferrite core (FK2) in its respective direction of longitudinal extent (ER1, ER2).

3. Vehicle inductive charging apparatus according to Claim 2, wherein the receiving coil arrangement (SA1, SA2, SA3, SA4, SA5, SA6) further comprises at least one connecting part (VT) composed of a non-ferromagnetic material which fills the at least one air gap (LS) and confers mechanical stability on the receiving coil arrangement (SA1, SA2, SA3, SA4, SA5, SA6).

4. Vehicle inductive charging apparatus according to one of the preceding claims, wherein the outer ferrite core (FK1) is of substantially annular or polygonal design.

5. Vehicle inductive charging apparatus according to one of the preceding claims, wherein the inner ferrite core (FK2) is of substantially rod-like design.

6. Vehicle inductive charging apparatus according to one of Claims 1 to 4, wherein the inner ferrite core (FK2) is of substantially cross-like, in particular spoke-like, design.

7. Vehicle inductive charging apparatus according to one of the preceding claims, wherein the receiving coil arrangement (SA1, SA2, SA3, SA4, SA5, SA6) further comprises an inner coil (SP2) which is wound around at least one section of the inner ferrite core (FK2).

8. Vehicle inductive charging apparatus according to Claim 7, wherein the outer coil (SP1) and the inner coil (SP2) are embodied such that they can be connected to one another in parallel or in series.

9. Vehicle inductive charging apparatus according to one of the preceding claims, wherein the outer ferrite core (FK1) or the inner ferrite core (FK2) has at least two regions (B1, B2, B3) which have different degrees of magnetic permeability.

10. Vehicle with a battery, in particular hybrid electric vehicle or electric vehicle with a traction battery, comprising a vehicle inductive charging apparatus having a receiving coil arrangement (SA1, SA2, SA3, SA4, SA5, SA6) according to one of the preceding claims for inductively charging the battery.

11. Stationary charging station for inductively charging a battery of a vehicle, in particular a traction battery of a hybrid electric vehicle or electric vehicle, comprising a coil arrangement which is designed in line with the receiving coil arrangement (SA1, SA2, SA3, SA4, SA5, SA6) of the vehicle inductive charging apparatus according to one of the preceding Claims 1 to 9.

## Revendications

1. Dispositif de charge par induction pour véhicule, qui comporte un ensemble bobine réceptrice (SA1, SA2, SA3, SA4, SA5, SA6) destiné à charger un véhicule par induction, dans lequel l'ensemble bobine réceptrice (SA1, SA2, SA3, SA4, SA5, SA6) comprend :
- un noyau de ferrite extérieur (FK1) qui est formé à la périphérie d'une surface (FL) ;
- un noyau de ferrite intérieur (FK2) qui est relié physiquement au noyau de ferrite extérieur (FK1) par le biais d'au moins un point de liaison (VS) et qui s'étend dans la surface (FL) à partir de ce point de liaison (VS),
**caractérisé en ce que**
- l'ensemble bobine réceptrice (SA1, SA2, SA3, SA4, SA5, SA6) comprend en outre une bobine extérieure (SP1) qui est enroulée le long d'une direction d'extension longitudinale (ER1) du noyau de ferrite extérieur (FK1) autour du noyau de ferrite extérieur (FK1) .

2. Dispositif de charge par induction pour véhicule selon la revendication 1, dans lequel l'ensemble bobine réceptrice (SA1, SA2, SA3, SA4, SA5, SA6) comprend en outre au moins un entrefer (LS) formé dans le noyau de ferrite extérieur (FK1), qui est réalisé dans le noyau de ferrite extérieur (FK1), dans le noyau de ferrite intérieur (FK2) et/ou entre les noyaux de ferrite extérieur (FK1) et intérieur (FK2), et interrompt les noyaux de ferrite extérieur (FK1) ou intérieur (FK2) dans leur direction d'extension longitudinale respective (ER1, ER2).

3. Dispositif de charge par induction pour véhicule selon la revendication 2, dans lequel l'ensemble bobine réceptrice (SA1, SA2, SA3, SA4, SA5, SA6) comprend en outre au moins une pièce de liaison (VT) constituée d'un matériau non ferromagnétique qui remplit ledit au moins un entrefer (LS) et confère une stabilité mécanique à l'ensemble bobine réceptrice (SA1, SA2, SA3, SA4, SA5, SA6).

4. Dispositif de charge par induction pour véhicule selon l'une des revendications précédentes,
dans lequel le noyau de ferrite extérieur (FK1) est sensiblement annulaire ou polygonal.

5. Dispositif de charge par induction pour véhicule selon l'une des revendications précédentes, dans lequel le noyau de ferrite intérieur (FK2) est sensiblement réalisé sous forme de tige.

6. Dispositif de charge par induction pour véhicule selon l'une des revendications 1 à 4, dans lequel le noyau de ferrite intérieur (FK2) est sensiblement réalisé sous forme de croix, en particulier sous forme de rayon.

7. Dispositif de charge par induction pour véhicule selon l'une des revendications précédentes, dans lequel l'ensemble bobine réceptrice (SA1, SA2, SA3, SA4, SA5, SA6) comprend en outre une bobine intérieure (SP2) enroulée autour d'au moins une partie dudit noyau de ferrite intérieur (FK2).

8. Dispositif de charge par induction pour véhicule selon la revendication 7, dans lequel les bobines extérieure (SP1) et intérieure (SP2) sont conçues pour pouvoir être connectées en parallèle ou en série l'une à l'autre.

9. Dispositif de charge par induction pour véhicule selon l'une des revendications précédentes, dans lequel le noyau de ferrite extérieur (FK1) et le noyau de ferrite intérieur (FK2) comportent au moins deux régions (B1, B2, B3) qui présentent des perméabilités magnétiques d'intensités différentes.

10. Véhicule à batterie, en particulier véhicule électrique hybride ou véhicule électrique à batterie de traction, comprenant un dispositif de charge par induction pour véhicule doté d'un ensemble bobine réceptrice (SA1, SA2, SA3, SA4, SA5, SA6) selon l'une des revendications précédentes pour la charge par induction de la batterie.

11. Station de charge stationnaire pour charger par induction une batterie d'un véhicule, en particulier une batterie de traction d'un véhicule électrique ou électrique hybride, comprenant un ensemble bobine qui est réalisé conformément à l'ensemble bobine réceptrice (SA1, SA2, SA3, SA4, SA5, SA6) du dispositif de charge par induction pour véhicule selon l'une des revendications 1 à 9 précédentes.
